# EUROPEAN PATENT APPLICATION

(11) **EP 4 406 645 A1**
(43) Date of publication of application: **31.07.2024**
(21) Application number: 22872276.5
(22) Date of filing: 20.09.2022
(51) Int. Cl.: B01J 27/224, B01D 53/94, B01J 35/02, F01N 3/10

(54) **EXHAUST GAS PURIFICATION CATALYST, AND EXHAUST GAS PURIFICATION CATALYST DEVICE FOR VEHICLES**

(30) Priority: 21.09.2021 JP 2021153247
(71) Applicant: N.E. Chemcat Corporation, Tokyo 105-6124 (JP); NISSAN MOTOR CO., LTD., Kanagawa 221-0023 (JP); Renault s.a.s, 92100 Boulogne Billancourt (FR)
(72) Inventor: TAKAYAMA, Akito, Tokyo 105-6124 (JP); MOCHIZUKI, Hiroshi, Tokyo 105-6124 (JP); NIGORIKAWA, Shinji, Atsugi-shi, Kanagawa 243-0123 (JP)
(74) Representative: TBK
(86) International application number: PCT/IB2022/000525
(87) International publication number: WO 2023/047185

(57) **Abstract**

To provide an exhaust gas purification catalyst or the like in which poisoning of a noble metal component by a Si-containing compound generated or detached from silicon carbide is inhibited, degradation of exhaust gas purification performances is inhibited over a long period and long-term durability is excellent. An exhaust gas purification catalyst 100 having a stacked structure including at least a substrate 10, a first coat layer 11 and a second coat layer 21 in the listed order, in which the substrate 10 is one selected from the group consisting of a silicon carbide carrier including silicon carbide and a silicon carbide-covering carrier on which a coating layer including silicon carbide is provided, the first coat layer 11 includes a compound including one or more alkaline-earth metals selected from the group consisting of magnesium (Mg), calcium (Ca), strontium (Sr), and barium (Ba), and the second coat layer 21 includes one or more platinum group elements selected from the group consisting of rhodium (Rh), platinum (Pt), and palladium (Pd).

## Description

### [Technical Field]

The present disclosure relates to an exhaust gas purification catalyst in which a platinum group catalyst is supported on a silicon carbide-based carrier, and an exhaust gas purification catalyst apparatus for vehicles, using the exhaust gas purification catalyst, and the like.

### [Background Art]

In general, exhaust gases emitted from internal-combustion engines of automobiles or the like contain harmful components such as carbon monoxide (CO), hydrocarbon (HC), and nitrogen oxide (NOx), and these harmful components are purified by exhaust gas purification catalysts and then released into the atmosphere. It is generally said that exhaust gas purification catalysts are needed to be at a temperature of 200°C or more for sufficiently purifying these harmful components. A temperature rise of exhaust gas purification catalysts has been conventionally made by use of exhaust heat from internal-combustion engines, namely, heat of exhaust gases.

However, if the temperature of exhaust gas purification catalysts does not reach a temperature necessary for purification of each component, for example, immediately after cold start of engines, exhaust gas purification catalysts may be insufficient in activity, thereby causing emission of unpurified harmful components into the environment (also referred to as "cold emission").

In recent years, regulation of the amount of emission of carbon dioxide (CO₂) as greenhouse gas has also been tightened. Since the amount of emission of CO₂ is proportional to the amount of fuel used for engine running, internal-combustion engines are desired to be small in amount of fuel used and good in fuel efficiency. Therefore, there is advanced the adoption of various efficient consumption conditions causing less heat loss and exhaust loss, whereas these conditions lead to reductions in combustion temperature and exhaust gas temperature. Therefore, a running environment in which a high exhaust gas temperature cannot be sufficiently achieved is being increased than before.

In order to solve such problems, a system called electric heating catalyst (EHC) has been developed which generates heat by energization in a honeycomb structure supporting a catalyst layer to rapidly heat the honeycomb structure to the catalyst activation temperature before engine starting or at the time of engine starting. For example, Patent Literature 1 discloses a carrier for electric heating type catalysts, the carrier including a honeycomb structure containing a silicon-silicon carbide composite material or silicon carbide as a main component, and paired electrode layers which are each formed on a side surface of the honeycomb structure and which are provided so as to face each other with the center of the honeycomb structure being interposed.

On the other hand, Patent Literature 2 discloses an exhaust gas purification catalyst in which a coat layer including a microwave absorbing material such as silicon carbide (SiC) and a catalyst supporting at least one noble metal selected from the group consisting of platinum (Pt), palladium (Pd) and rhodium (Rh) is provided on a honeycomb-shaped monolith substrate made of cordierite. The exhaust gas purification catalyst is raised in temperature by irradiating the microwave absorbing material with microwave from a microwave generator. The Patent Literature also discloses that SiO vapor is produced at an ultra-high temperature of, for example, 1600°C or more by heating silicon carbide with microwave and this SiO vapor poisons the noble metal, and furthermore combination use of nickel oxide (NiO) generating Ni₂SiO₄ at 1200°C and/or chromium oxide (III) (Cr₂O₃) generating Cr₂SiO₄ at 1723°C can allow the SiO vapor to be trapped by nickel oxide and/or chromium oxide, thereby inhibiting the noble metal, in particular, palladium (Pd) and/or rhodium (Rh) from being poisoned and degraded by silicon carbide.

### [Citation List]

### [Patent Literature]

[Patent Literature 1] Japanese Patent Laid-Open No. 2020-081922
[Patent Literature 2] Japanese Patent Laid-Open No. 2019-173583

### [Summary of Invention]

### [Technical Problem]

However, according to findings of the present inventors, Patent Literature 2 has exhibited an insufficient effect of enhancing catalyst performances, although the effect of inhibiting poisoning of palladium (Pd), rhodium (Rh), or the like by use of nickel oxide or chromium oxide has been confirmed.

The present disclosure has been made in view of the above problems. Specifically, an object of the present disclosure is to provide an exhaust gas purification catalyst in which poisoning of a noble metal component by a Si-containing compound generated or detached from silicon carbide is inhibited and poisoning inhibition action effectively functions even under a lower-temperature running environment at an exhaust gas temperature of, for example, less than 1100°C, and thus not only degradation of exhaust gas purification performances is inhibited over a long period and long-term durability is excellent, but also exhaust gas purification performances are excellent, as well as an exhaust gas purification catalyst apparatus for vehicles or the like, using the exhaust gas purification catalyst.

### [Solution to Problem]

The present inventors have made intensive studies in order to solve the above problems. As a result, the inventors have found that the above problems can be solved by not only providing a first coat layer allowing for a reduction in opportunity of contact of a Si-containing compound generated or detached from silicon carbide with a noble metal component, but also allowing the first coat layer to contain an alkaline-earth metal, and thus have completed the present disclosure.

Specifically, the present disclosure provides various specific aspects shown below.
(1) An exhaust gas purification catalyst having a stacked structure including at least a substrate, a first coat layer and a second coat layer in the listed order, wherein the substrate is one selected from the group consisting of a silicon carbide carrier including silicon carbide and a silicon carbide-covering carrier on which a coating layer including silicon carbide is provided, the first coat layer includes a compound including one or more alkaline-earth metals selected from the group consisting of magnesium (Mg), calcium (Ca), strontium (Sr), and barium (Ba), and the second coat layer includes one or more platinum group elements selected from the group consisting of rhodium (Rh), platinum (Pt), and palladium (Pd).
(2) The exhaust gas purification catalyst according to (1), wherein the first coat layer includes 10 parts by mass or less of a platinum group element under the assumption that a total content of the platinum group elements included in other than the first coat layer is 100 parts by mass.
(3) The exhaust gas purification catalyst according to (1) or (2), wherein the first coat layer includes substantially no platinum group element.
(4) The exhaust gas purification catalyst according to any one of (1) to (3), wherein the first coat layer further includes alumina.
(5) The exhaust gas purification catalyst according to (4), wherein a molar ratio between the alumina and the alkaline-earth metal element included in the first coat layer is 1:0.01 to 1.2.
(6) The exhaust gas purification catalyst according to any one of (1) to (5), wherein the platinum group elements included in the second coat layer include rhodium (Rh).
(7) The exhaust gas purification catalyst according to any one of (1) to (6), wherein the stacked structure includes at least the substrate, the first coat layer, the second coat layer, and a third coat layer in the listed order, and the third coat layer includes one or more platinum group elements selected from the group consisting of ruthenium (Ru), rhodium (Rh), palladium (Pd), and platinum (Pt).
(8) The exhaust gas purification catalyst according to any one of (1) to (7), wherein the second coat layer further includes an oxygen storage and release material.
(9) The exhaust gas purification catalyst according to (8), wherein the oxygen storage and release material in the second coat layer includes a powder of one or more inorganic oxides selected from the group consisting of ceria and a ceria-based composite oxide.
(10) An exhaust gas purification catalyst apparatus for vehicles, including at least the exhaust gas purification catalyst according to any one of (1) to (9), and a heating unit that electrically heats the exhaust gas purification catalyst.

### [Advantageous Effects of Invention]

The present disclosure provides an exhaust gas purification catalyst in which, although a substrate including silicon carbide is used, poisoning of a noble metal component is inhibited, poisoning inhibition action effectively functions even under a lower-temperature running environment, degradation of various exhaust gas purification performances is inhibited over a long period, long-term durability is excellent, and also catalyst performances are excellent, an exhaust gas purification catalyst apparatus for vehicles, using the exhaust gas purification catalyst, and the like.

The exhaust gas purification catalyst or the like of the present disclosure avoids an excess amount of a noble metal component in consideration of poisoning degradation from being contained, and thus allows a required amount of a noble metal component to be effectively utilized. Conversely, the exhaust gas purification catalyst or the like of the present disclosure exhibits excellent purification performances of a three way catalyst (TWC) not only being excellent in long-term durability, but also allowing for decrease of NOx, CO, HC, and the like in exhaust gas, even by a relatively small amount of a noble metal used. Accordingly, the exhaust gas purification catalyst or the like of the present disclosure can be particularly suitably used in a recent light automobile or small ordinary automobile in which a gasoline engine high in efficiency, small in amount of emission of CO₂ and good in fuel efficiency is adopted.

### [Brief Description of Drawing]

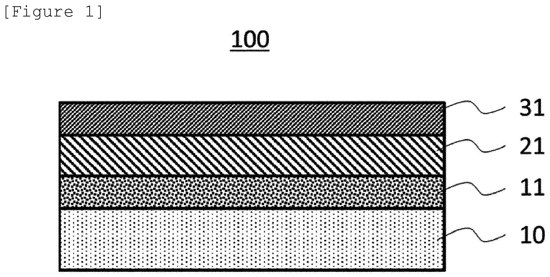

[Figure 1] Figure 1 is a general schematic cross-sectional view of an exhaust gas purification catalyst 100 of one aspect of the present disclosure.

### [Description of Embodiments]

Hereinafter, embodiments of the present disclosure are described in detail with reference to the drawing. Positional relationships such as vertical and horizontal relationships are based on positional relationships illustrated in the drawing, unless particularly noted. Moreover, dimensional ratios in the drawing are not limited to ratios illustrated. Herein, the following embodiments are illustrative for describing the present disclosure, and the present disclosure is not limited thereto. In other words, the present disclosure can be arbitrarily modified and carried out without departing from the gist thereof. The notation of a numerical value range, for example, "1 to 100", herein encompasses both a lower limit value "1" and an upper limit value "100". The same also applies to the notation of any other numerical value range.

Figure 1 is a schematic view illustrating a general configuration of an exhaust gas purification catalyst 100 of one embodiment of the present disclosure. The exhaust gas purification catalyst 100 includes at least a substrate 10 not only supporting a catalyst layer, but also partitioning a gas flow channel through which exhaust gas passes, and serving as a catalyst carrier, a first coat layer 11 provided on at least one surface of the substrate 10, a second coat layer 21 provided on an upper surface of the first coat layer 11, and a third coat layer 31 provided on an upper surface of the second coat layer 21. In other words, in the present embodiment, a stacked structure including at least the first coat layer 11, the second coat layer 21, and the third coat layer 31 in the listed order is provided on the substrate 10.

The substrate 10 is a catalyst member that supports the above stacked structure (stacked article). The substrate 10 is used as an integral structure type catalyst member in which a catalyst layer is provided on the substrate, and thus is increased in applicability to various applications, for example, is easily assembled into an apparatus. For example, in an exhaust gas purification application, exhaust gas purification can be performed at a high efficiency by using a honeycomb structure substrate or the like as the substrate 10 and placing the integral structure type catalyst member in a passage through which gas flow passes, and allowing gas flow to pass through a cell in the honeycomb structure substrate.

One preferred mode of the substrate 10 is, for example, a silicon carbide carrier including silicon carbide (SiC). There are known, as specific examples of the silicon carbide carrier including silicon carbide, for example, a ceramic monolith carrier of silicon carbide, a ceramic monolith carrier of silicon carbide-silicon, and such a ceramic monolith carrier to which various ceramic raw materials such as cordierite, alumina, mullite and silicon nitride, tantalum silicide (TaSi₂), chromium silicide (CrSi₂), and/or the like are/is further blended, but not particularly limited thereto. Such a ceramic monolith carrier can be obtained by, for example, blending to a raw material powder including a silicon carbide particle, a silicon particle and/or the like, a powder of any other oxide, a binder, a lubricant, a plasticizer, a surfactant, a defoaming material, water and/or the like, kneading and extruding the resulting blended product to provide a formed product, and sintering the formed product.

Another preferred mode of the substrate 10 is, for example, a silicon carbide-covering carrier on which a coating layer including silicon carbide is provided. Specific examples of the silicon carbide-covering carrier include one in which a coating layer including silicon carbide (SiC) is provided on a carrier of any of various ceramic monolith substrates such as cordierite, silica, alumina, mullite, aluminum titanate, silicon carbide, and silicon nitride. Silicon carbide included in the coating layer functions as a microwave absorbing material that absorbs microwave radiated from a microwave generator, at a relatively high efficiency, to convert the microwave to heat and thus generate heat, and therefore the coating layer including silicon carbide (SiC) functions as a microwave absorbing layer. The coating layer may also include any other microwave absorbing material. Examples of such any other microwave absorbing material include perovskite-type composite oxides such as lanthanum (La)-cobalt (Co)-based composite oxide, strontium (Sr)-cobalt-based composite oxide, and lanthanum-strontium-cobalt-based composite oxide; ferrites such as iron oxide; manganese oxide; cobalt oxide; and zirconium boride, but not particularly limited thereto. Such a coating layer can be obtained by layer formation involving, for example, wash-coat of a carrier with a slurry in which a raw material powder including a silicon carbide particle and any other microwave absorbing material is blended with a powder of any other oxide, a binder, a lubricant, a plasticizer, a surfactant, a defoaming material, water and/or the like. The total content of silicon carbide relative to the total amount of the coating layer can be appropriately set depending on desired performances, and is not particularly limited. The total content is generally 1% by mass to 50% by mass as a target, and is preferably 3% by mass to 20% by mass. The average particle size D50, the BET specific surface area and the like of silicon carbide here used can also be appropriately set depending on desired performances, and are not particularly limited. The average particle size D50 is generally 0.1 µm to 10 µm as a target, and is preferably 0.5 µm to 5 µm. The BET specific surface area is generally 12 m²/g to 100 m²/g as a target, and is preferably 2 m²/g to 30 m²/g.

The shape of the substrate 10 is not particularly limited, and any shape, for example, a rectangular prism such as a hexagonal prism or quadrangular prism, a cylinder shape, an elliptic cylinder shape, a spherical shape, a honeycomb shape, or a sheet shape can be selected. Such a shape can be adopted singly or in appropriate combinations of two or more kinds thereof. A honeycomb carrier having a honeycomb shape is preferably used in an exhaust gas purification application. When the substrate 10 is a honeycomb carrier, the number of cells, the partition wall thickness, the aperture ratio, the pore volume, the porosity, and the like can be appropriately set depending on desired performances, and are not particularly limited. For example, the volume (total volume of cells) of the substrate 10, while varies depending on a space or the like for assembling, is usually preferably 0.1 L to 5 L, more preferably 0.5 L to 3 L. The number of cells is generally 200 cpsi to 400 cpsi as a target. Furthermore, the pore volume or the porosity is generally 0.2 cm³/g to 1.5 cm³/g or 20% to 80% as a target.

Herein, the "provided on at least one surface of the substrate 10" means that both modes are encompassed in which the first coat layer 11 is provided on only an upper surface (or lower surface) of the substrate 10 as illustrated in Figure 1 and in which the first coat layer 11 is provided on each of an upper surface and a lower surface of the substrate 10. Herein, the "provided on one surface" is used to mean both modes in which the substrate 10 and the first coat layer 11 are directly mounted and in which the substrate 10 and the first coat layer 11 are located apart with any other layer(s) being interposed. In other words, any other layer(s) (for example, a primer layer and/or an adhesive layer) may be interposed between the substrate 10 and the first coat layer 11.

The above stacked structure (stacked article) has a stacked structure including at least the first coat layer 11, the second coat layer 21, and the third coat layer 31 in the listed order. Herein, the "including at least in the listed order" means that the first coat layer 11, the second coat layer 21, and the third coat layer 31 are located in the listed order, and any other layer(s) (for example, a primer layer and/or an adhesive layer) may be interposed among these layers as long as these layers are arranged in the listed order. In other words, the stacked structure may have a mode in which the first coat layer 11, the second coat layer 21, and the third coat layer 31 are directly mounted (first coat layer 11/second coat layer 21/third coat layer 31) or a mode in which the first coat layer 11, the second coat layer 21, and the third coat layer 31 are located apart with any other layer(s) being interposed (for example, first coat layer 11/other layer(s)/second coat layer 21/other layer(s)/third coat layer 31, first coat layer 11/other layer(s)/second coat layer 21/third coat layer 31, or first coat layer 11/second coat layer 21/other layer(s)/third coat layer 31).

In the present embodiment, the first coat layer 11 is provided on at least one surface of the substrate 10 by a wash-coat method, the second coat layer 21 is provided on the first coat layer 11 by a wash-coat method, and the third coat layer 31 is provided on the second coat layer 21 by a wash-coat method.

The first coat layer 11 is a catalyst layer including a compound including one or more alkaline-earth metals selected from the group consisting of magnesium (Mg), calcium (Ca), strontium (Sr), and barium (Ba). The first coat layer 11 is provided closer to the substrate 10 than the second coat layer 21 including a platinum group element (and the third coat layer 31 that can include a platinum group element), thereby inhibiting such a platinum group element from being poisoned by a Si-containing compound generated or detached from the substrate 10 including silicon carbide. While the reason why a Si-containing compound is generated or detached from the substrate 10 including silicon carbide is not clear, it is considered that a nitrogen compound, a sulfur compound, water vapor, and the like included in exhaust gas are contacted with a catalyst at a high temperature to result in generation of a trace amount of mixed acid and thus generation or elution of a trace amount of silicon from silicon carbide. The compound including alkaline-earth metal(s) included in the first coat layer 11 has high reactivity with silicon. Therefore, the first coat layer 11 including alkaline-earth metal(s) to be more easily ionized than silicon under similar conditions is provided between the substrate 10 including silicon carbide and the second coat layer 21 including a platinum group element, thus silicon or a silicon compound generated or detached can be trapped in the first coat layer 11 and also such silicon or silicon compound can be immobilized by reaction with alkaline-earth metal(s), thereby allowing for inhibition of poisoning of a noble metal component.

The form of the compound of alkaline-earth metal(s) included in the first coat layer 11 is not particularly limited, and examples thereof include sulfate, carbonate, composite oxide, and oxide. Examples with respect to barium (Ba) include BaO, Ba(CH₃COO)₂, BaCt, BaSO₄, BaCO₃, BaZrO₃, and BaAl₂O₄.

The compound of alkaline-earth metal(s) may be included in the first coat layer 11, and a mode is preferred in which the compound is supported on a base material particle conventionally used in such an exhaust gas purification catalyst. The base material particle here used functions as a carrier particle supporting the compound of alkaline-earth metal(s) with high dispersity. Examples of the base material particle include aluminum oxide (alumina) such as γ-alumina, and the type is not particularly limited. It is also considered that, for example, the first coat layer 11 can contain alumina, thereby allowing the silicon or silicon compound trapped to be immobilized as a more stable composite compound such as Si-Al-Ba and thus inhibiting the silicon or silicon compound from being re-eluted. The average particle size (D50) of the base material particle here used can be appropriately set depending on desired performances, is not particularly limited, and is preferably 0.3 µm or more, more preferably 0.5 µm or more, further preferably 1.0 µm or more, and preferably 30 µm or less, more preferably 15 µm or less, further preferably 10 µm. or less from the viewpoint of not only retention of a large specific surface area, but also an increase in heat resistance. The average particle size D50 herein means a median size measured with a laser diffraction type particle size distribution measurement apparatus (for example, laser diffraction type particle size distribution measurement apparatus SALD-3100 manufactured by Shimadzu Corporation). The above base material particle used can be any of commercially available products of various grades, or can also be produced by a method known in the art.

The content (amount of application) of the compound including alkaline-earth metal(s) in the first coat layer 11 can be appropriately set depending on desired performances, is not particularly limited, and is preferably 3.0 g/L to 25.0 g/L, more preferably 4.0 g/L to 20.0 g/L, further preferably 5.0 g/L to 15.0 g/L based on the mass of the compound per liter of the substrate 10 from the viewpoint of enhancements in long-term durability and exhaust gas purification performances, and the like. Herein, the "per liter of the substrate 10" means ""per liter of the entire bulk volume" including not only the net volume of the substrate 10, but also the volumes of cells, and pores (voids) in a partition wall, formed in the substrate 10".

Similarly, the content (amount of application) of the base material particle in the first coat layer 11 can be appropriately set depending on desired performances, is not particularly limited, and is preferably 5.0 g/L to 30.0 g/L, more preferably 10.0 g/L to 27.0 g/L, further preferably 15.0 g/L to 25.0 g/L based on the mass of the compound per liter of the substrate 10 from the viewpoint of enhancements in long-term durability and exhaust gas purification performances, and the like.

The molar ratio between the base material particle and the compound including the alkaline-earth metal(s) included in the first coat layer 11 can be appropriately set depending on desired performances, is not particularly limited, and is preferably 1:0.01 to 1.2, more preferably 1:0.05 to 1.1, further preferably 1:0.1 to 1.0 from the viewpoint of enhancements in long-term durability and exhaust gas purification performances, and the like.

The presence of the first coat layer 11 can here inhibit poisoning of a noble metal included in the second coat layer 21 (furthermore the third coat layer 31), and thus the first coat layer 11 may include a platinum group element. Examples of such a platinum group element include platinum (Pt), palladium (Pd), rhodium (Rh), ruthenium (Ru), iridium (Ir) and osmium (Os). However, if the first coat layer 11 contains a platinum group element, such a platinum group element included in the first coat layer 11 can be poisoned by silicon or a silicon compound generated or detached from the substrate 10 to cause degradation of performances, resulting in a reduction in efficiency of use of a platinum group element in the entire exhaust gas purification catalyst 100. Therefore, when the first coat layer 11 contains a platinum group element, the content of such a platinum group element included in the first coat layer 11 is preferably 10 parts by mass or less, more preferably 5 parts by mass or less, further preferably 3 parts by mass or less under the assumption that the total content of platinum group elements (platinum group elements included the second coat layer 21 and the third coat layer 31 in the present embodiment) included in other than the first coat layer 11 in the exhaust gas purification catalyst 100 is 100 parts by mass, from the viewpoint of an increase in efficiency of use of platinum group elements in the entire exhaust gas purification catalyst 100.

In one further preferred aspect, the first coat layer 11 preferably includes substantially no platinum group element in consideration of degradation of performances by poisoning, from the viewpoint of an increase in efficiency of use of platinum group elements in the entire exhaust gas purification catalyst 100. The first coat layer 11 includes substantially no platinum group element, thereby allowing for an increase in efficiency of use of platinum group elements in the entire exhaust gas purification catalyst 100. Herein, the "first coat layer 11 including substantially no platinum group element" means less than 0.1 g/L, more preferably 0.0 g/L to 0.05 g/L, further preferably 0.0 g/L to 0.01 g/L based on the mass of a platinum group element per liter of the substrate 10.

The second coat layer 21 includes one or more platinum group elements selected from the group consisting of rhodium (Rh), platinum (Pt), and palladium (Pd) in a catalyst component. Such platinum group elements in a catalyst component have an action of promoting oxidation reaction of CO or HC and reduction reaction of NOx. In the present embodiment, in particular, such platinum group elements included in the second coat layer preferably include rhodium excellent in action of promoting reduction reaction of NOx.

Such platinum group elements in a catalyst component may be included in the second coat layer 21, and a mode is preferred in which such platinum group elements are supported on a base material particle conventionally used in such an exhaust gas purification catalyst. The base material particle here used functions as a carrier particle supporting such platinum group elements with high dispersity. Examples of the base material particle include oxygen storage and release materials (OSC materials) such as cerium oxide (ceria) and ceria-zirconia composite oxide (ceria-zirconia and the like), and aluminum oxide (alumina) such as γ-alumina, and the type is not particularly limited. The base material particle may also be a rare-earth element such as lanthanum or yttrium, a transition metal element, or a composite oxide or a solid solution to which an alkaline-earth metal element is added. Such a base material particle can be used singly or in any combinations of two or more kinds thereof at any ratio. The average particle size (D50) of the base material particle can be appropriately set depending on desired performances, is not particularly limited, and is preferably 0.3 µm or more, more preferably 0.5 µm or more, further preferably 1.0 µm or more, and preferably 30 µm or less, more preferably 15 µm or less, further preferably 10 µm or less from the viewpoint of not only retention of a large specific surface area, but also an increase in heat resistance and then an increase in number of active sites of the catalyst itself, and the like. The above base material particle used can be any of commercially available products of various grades, or can also be produced by a method known in the art.

In one preferred aspect, the second coat layer 21 includes a composite powder in which such platinum group elements are supported on an oxygen storage and release material particle and/or on an alumina particle. The form of the composite powder can be taken, thereby allowing such platinum group elements to be supported with high dispersity and enhancing catalyst performances, and also further strengthening purification performances by oxygen storage capacity of an oxygen storage and release material in the case of use of the oxygen storage and release material. The oxygen storage and release material here used refers to one in which oxygen in exhaust gas is stored at a lean air-fuel ratio of exhaust gas (namely, oxygen excess atmosphere) and oxygen stored is released at a rich air-fuel ratio of exhaust gas (namely, fuel excess atmosphere). Specific examples thereof include ceria (cerium oxide), and ceria-based composite oxide such as ceria-zirconia, but not particularly limited thereto. The oxygen storage and release material can be used singly or in appropriate combinations of two or more kinds thereof. The above oxygen storage and release material used can be any of commercially available products of various grades, or can also be produced by a method known in the art, such as a coprecipitation method or an alkoxide method.

The content (amount of application) of such platinum group elements in the second coat layer 21 can be appropriately set depending on desired performances, is not particularly limited, and is preferably 0.1 g/L to 5.0 g/L, more preferably 0.2 g/L to 3.0 g/L, further preferably 0.3 g/L to 1.0 g/L based on the mass of a platinum group element per liter of the substrate 10 from the viewpoint of enhancements in exhaust gas purification performances, and the like.

The content (amount of application) of the base material particle in the second coat layer 21 can be appropriately set depending on desired performances, is not particularly limited, and is preferably 100.0 g/L to 150.0 g/L, more preferably 110.0 g/L to 140.0 g/L, further preferably 120.0 g/L to 130.0 g/L based on the mass of a platinum group element per liter of the substrate 10 from the viewpoint of enhancements in exhaust gas purification performances, and the like.

The content rate of the oxygen storage and release material in the second coat layer 21 can be appropriately set depending on desired performances, is not particularly limited, and is preferably 50.0% by mass to 80.0% by mass, more preferably 55.0% by mass to 75.0% by mass, further preferably 60.0% by mass to 70.0% by mass relative to the total amount of the solid content in the second coat layer 21 from the viewpoint of enhancements in long-term durability and exhaust gas purification performances, and the like.

The content rate of alumina in the second coat layer 21 can be appropriately set depending on desired performances, is not particularly limited, and is preferably 20.0% by mass to 50.0% by mass, more preferably 25.0% by mass to 45.0% by mass, further preferably 30.0% by mass to 40.0% by mass relative to the total amount of the solid content in the second coat layer 21 from the viewpoint of enhancements in long-term durability and exhaust gas purification performances, and the like.

The third coat layer 31 includes one or more platinum group elements selected from the group consisting of ruthenium (Ru), rhodium (Rh), palladium (Pd), and platinum (Pt) in a catalyst component. Such platinum group elements in a catalyst component have an action of promoting oxidation reaction of CO or HC and reduction reaction of NOx. In the present embodiment, in particular, such platinum group elements included in the third coat layer 31 preferably include palladium excellent in action of promoting oxidation reaction of CO or HC.

Such platinum group elements in a catalyst component may be included in the third coat layer 31, and a mode is preferred in which such platinum group elements are supported on a base material particle conventionally used in such an exhaust gas purification catalyst. The base material particle here used functions as a carrier particle supporting such platinum group elements with high dispersity. Examples of the base material particle include zirconium oxide (zirconia), and aluminum oxide (alumina) such as γ-alumina, and the type is not particularly limited. The base material particle may also be a rare-earth element such as lanthanum or yttrium, a transition metal element, or a composite oxide or a solid solution to which an alkaline-earth metal element is added. Such a base material particle can be used singly or in any combinations of two or more kinds thereof at any ratio. The average particle size (D50) of the base material particle can be appropriately set depending on desired performances, is not particularly limited, and is preferably 0.3 µm or more, more preferably 0.5 µm or more, further preferably 1.0 µm or more, and preferably 30 µm or less, more preferably 15 µm or less, further preferably 10 µm or less from the viewpoint of not only retention of a large specific surface area, but also an increase in heat resistance and then an increase in number of active sites of the catalyst itself, and the like. The above base material particle used can be any of commercially available products of various grades, or can also be produced by a method known in the art, such as a coprecipitation method or an alkoxide method.

In one preferred aspect, the third coat layer 31 includes a composite powder in which such platinum group elements are supported on a zirconia particle and/or on an alumina particle. The form of the composite powder can be taken, thereby allowing such platinum group elements to be supported with high dispersity and enhancing catalyst performances, and also imparting excellent heat resistance.

The content (amount of application) of such platinum group elements in the third coat layer 31 can be appropriately set depending on desired performances, is not particularly limited, and is preferably 1.5 g/L to 10.0 g/L, more preferably 1.8 g/L to 2.7 g/L, further preferably 2.0 g/L to 2.5 g/L based on the mass of a platinum group element per liter of the substrate 10 from the viewpoint of enhancements in exhaust gas purification performances, and the like.

The content (amount of application) of the base material particle in the third coat layer 31 can be appropriately set depending on desired performances, is not particularly limited, and is preferably 85.0 g/L to 135.0 g/L, more preferably 95.0 g/L to 125.0 g/L, further preferably 105.0 g/L to 115.0 g/L based on the mass of a platinum group element per liter of the substrate 10 from the viewpoint of enhancements in exhaust gas purification performances, and the like.

The content rate of zirconia in the third coat layer 31 can be appropriately set depending on desired performances, is not particularly limited, and is preferably 25.0% by mass to 55.0% by mass, more preferably 30.0% by mass to 50.0% by mass, further preferably 35.0% by mass to 45.0% by mass relative to the total amount of the solid content in the third coat layer 31 from the viewpoint of enhancements in long-term durability and exhaust gas purification performances, and the like.

The content rate of alumina in the third coat layer 31 can be appropriately set depending on desired performances, is not particularly limited, and is preferably 45.0% by mass to 75.0% by mass, more preferably 50.0% by mass to 70.0% by mass, further preferably 55.0% by mass to 65.0% by mass relative to the total amount of the solid content in the third coat layer 31 from the viewpoint of enhancements in long-term durability and exhaust gas purification performances, and the like.

The second coat layer 21 and the third coat layer 31 preferably include substantially no platinum (Pt). No platinum (Pt) is substantially included, and thus one can be obtained which is relatively inexpensive and is increased in efficiency of use of PGM. Herein, the second coat layer 21 and the third coat layer 31 including substantially no platinum group element means that the content (amount of application) of platinum in each of the second coat layer 21 and the third coat layer 31 is less than 0.1 g/L based on the mass of platinum per liter of the substrate 10, more preferably 0.0 g/L to 0.05 g/L, further preferably 0.0 g/L to 0.01 g/L.

The total content of platinum group elements included in the first coat layer 11, the second coat layer 21 and the third coat layer 31 (the amount of application in terms of the mass of a platinum group element per liter of the substrate 10) is usually preferably 1.6 g/L to 8.0 g/L, more preferably 2.0 g/L to 5.7 g/L, further preferably 2.3 g/L to 3.5 g/L from the viewpoint of not only allowing the amount of use of platinum group elements to be kept relatively small, but also imparting high catalyst performances.

The first coat layer 11, the second coat layer 21 and the third coat layer 31 may each further contain a binder known in the art, in addition to the above essential components. The type of the binder is not particularly limited, and examples include various sols such as boehmite, alumina sol, titania sol, silica sol, and zirconia sol. A soluble salt such as aluminum nitrate, aluminum acetate, titanium nitrate, titanium acetate, zirconium nitrate, or zirconium acetate can also be used as the binder. An acid such as acetic acid, nitric acid, hydrochloric acid, or sulfuric acid can also be used as the binder. The amount of the binder used is not particularly limited, and is preferably 0.01% by mass to 15% by mass in total, more preferably 0.05% by mass to 10% by mass in total, further preferably 0.1% by mass to 8% by mass in total relative to the total amount of each of the layers.

The first coat layer 11, the second coat layer 21 and the third coat layer 31 may each further contain a catalyst material, a co-catalyst material, and various additives known in the art, in addition to the above essential components. Examples of such additives include a dispersion stabilizer such as a nonionic surfactant or an anionic surfactant; a pH adjuster; a viscosity modifier; alkali metal; and alkaline-earth metal, but not particularly limited thereto.

The exhaust gas purification catalyst 100 having the above configuration can be produced by, for example, sequentially providing the first coat layer 11, the second coat layer 21 and the third coat layer 31 on the substrate 10. For example, the exhaust gas purification catalyst 100 of the present embodiment can be obtained by wash-coat of the substrate 10 with a slurry-like mixture for the first coat layer 11 and blowing off the excess to form the first coat layer 11, furthermore wash-coat of the first coat layer 11 with a slurry-like mixture for the second coat layer 21 and blowing off the excess to form the second coat layer 21, and thereafter wash-coat of the second coat layer 21 with a slurry-like mixture for the third coat layer 31 and blowing off the excess to form the third coat layer 31. Each of the slurry-like mixtures can be, if necessary, blended with the above binder, blended with an acid or a base for pH adjustment, and/or blended with a surfactant and/or a dispersing resin for viscosity adjustment and/or an enhancement in slurry dispersibility.

The method for providing the slurry-like mixture to the substrate 10 may be performed according to an ordinary method, and is not particularly limited. Various known coating methods, wash-coat methods, zone coat methods, and the like can be each applied. The method for preparing each of the slurry-like mixtures may be performed according to an ordinary method, and is not particularly limited. A known pulverizing or mixing method such as pulverizing or mixing by a ball mill can be applied. After the slurry-like mixtures are provided, drying and/or firing can be performed according to ordinary method(s). The drying temperature is not particularly limited, and is, for example, preferably 70°C to 200°C, more preferably 80°C to 150°C. The firing temperature is not particularly limited, and is, for example, preferably 300°C to 650°C, more preferably 400°C to 600°C. The heating unit here used can be, for example, a known heating unit such as an electric furnace or a gas furnace.

The exhaust gas purification catalyst 100 of the present embodiment, thus configured, is useful as an exhaust gas purification catalyst in an internal-combustion engine, in particular, as a exhaust gas purification three way catalyst of an automobile, and can be used as an electric heating catalyst (EHC) to be raised in temperature by irradiation with microwave from a microwave generator. In the exhaust gas purification catalyst 100 of the present embodiment, a Si-containing compound generated or detached from the substrate 10 including silicon carbide is trapped in the first coat layer 11 or reacts with an alkaline-earth metal and then is immobilized, and thus degradation of performances of platinum group elements included in the second coat layer 21 and the third coat layer 31 is inhibited and a required amount of a noble metal component is effectively utilized. Thus, the exhaust gas purification catalyst 100 of the present embodiment exhibits excellent purification performances of a three way catalyst (TWC) allowing for decrease of NOx, CO, HC, and the like in exhaust gas, even by a relatively small amount of a noble metal used, and also excellent long-term durability, and thus is particularly useful in a recent light automobile or small ordinary automobile in which a gasoline engine high in efficiency, small in amount of emission of CO₂ and good in fuel efficiency is adopted.

### [Examples]

Hereinafter, features of the present disclosure are more specifically described with reference to Test Examples, Examples and Comparative Examples, but the present disclosure is not limited thereto at all. In other words, the materials, amounts used, proportions, treatment details, treatment procedures, and the like shown in Examples below can be appropriately modified as long as these are not beyond the spirit of the present disclosure. The values with respect to various production conditions and evaluation results in Examples below each have a meaning as a preferred upper limit value or a preferred lower limit value in embodiments of the present disclosure, and each preferred range thereof may be a range defined by a combination of the upper limit or lower limit value with any value in Examples below, or a combination of values in Examples below.

### (Preparation Example)

First, a Rh-supported Al₂O₃ powder, a Rh-supported CeO₂-ZrO₂ composite oxide powder, a Pd-supported Al₂O₃ powder, and a Pd-supported ZrO₂ composite oxide powder were each prepared as a composite powder in which a platinum group element was supported on a base material particle, according to the following procedure. The amount of each of various raw materials used was adjusted so that a composition shown in Table 1 was achieved in formation of each coat layer on a honeycomb carrier. Hereinafter, [Ce/Zr] represents a CeO₂-ZrO₂-based composite oxide at a compositional ratio on a mass basis of oxides, of 30:55, and the same also applies to Examples and Comparative Examples below.

### <Rh-supported Al₂O₃ powder>

A commercially available γ-alumina powder was impregnated with a rhodium nitrate solution diluted with pure water, and thus the solution was supported on the powder. The powder impregnated with the solution was fired in air at 500°C for 1 hour, thereby preparing a Rh-supported Al₂O₃ powder.

### <Rh-supported CeO₂-ZrO₂ composite oxide powder>

A commercially available [Ce/Zr] powder was impregnated with a rhodium nitrate solution diluted with pure water, and thus the solution was supported on the powder. The powder impregnated with the solution was fired in air at 500°C for 1 hour, thereby preparing a Rh-supported CeO₂-ZrO₂ composite oxide powder.

### <Pd-supported Al₂O₃ powder>

A commercially available γ-alumina powder was impregnated with a palladium nitrate solution diluted with pure water, and thus the solution was supported on the powder. The powder impregnated with the solution was fired in air at 500°C for 1 hour, thereby preparing a Pd-supported Al₂O₃ powder.

### <Pd-supported ZrO₂ composite oxide powder>

A commercially available ZrO₂-based powder was impregnated with a palladium nitrate solution diluted with pure water, and thus the solution was supported on the powder. The powder impregnated with the solution was fired in air at 500°C for 1 hour, thereby preparing a Pd-supported ZrO₂ composite oxide powder.

### (Example 1)

An exhaust gas purification catalyst of Example 1, having a four-layer stacked structure including a silicon carbide honeycomb carrier, a first coat layer, a second coat layer, and a third coat layer in the listed order, was produced by the following procedure.

### <Formation of first coat layer (Ba-Al₂O₃ layer)>

First, a γ-alumina powder, barium sulfate, nitric acid and a cellulose-based viscosity modifier were loaded together with pure water in an amount providing a solid content of 25% by mass, to a pot mill, and then mixed and pulverized, thereby preparing a slurry for the first coat layer. A silicon carbide honeycomb carrier (manufactured by NGK INSULATORS LTD., 300 cells/12 mills, Φ143.8 × 49 mm, 796 cc) was wash-coated with the resulting slurry for the first coat layer so that the amount of wash-coat with alumina was 23.8 g/L and the amount of wash-coat with barium sulfate was 6.2 g/L (amounts of WC), and dried at 150°C for 2 hours and then fired at 550°C for 0.5 hours, thereby producing the first coat layer on the silicon carbide honeycomb carrier.

### <Formation of second coat layer (Rh-containing catalyst layer)>

First, a Rh-supported Al₂O₃ powder, a Rh-supported CeO₂-ZrO₂ composite oxide powder and nitric acid were loaded together with pure water in an amount providing a solid content of 45% by mass, to a pot mill, and then mixed and pulverized, thereby preparing a slurry for the second coat layer. The first coat layer on the silicon carbide honeycomb carrier was wash-coated with the resulting slurry for the second coat layer, and dried at 150°C for 2 hours and then fired at 550°C for 0.5 hours, thereby producing the second coat layer on the first coat layer on the silicon carbide honeycomb carrier. The amount of WC with the second coat layer was 124.78 g/L, in which the amount of application of Rh was 0.38 g/L.

### <Formation of third coat layer (Pd-containing catalyst layer)>

First, a Pd-supported Al₂O₃ powder, a Pd-supported ZrO₂ composite oxide powder, barium sulfate and nitric acid were loaded together with pure water in an amount providing a solid content of 40% by mass, to a pot mill, and then mixed and pulverized, thereby preparing a slurry for the third coat layer. The second coat layer on the silicon carbide honeycomb carrier was wash-coated with the resulting slurry for the third coat layer, and dried at 150°C for 2 hours and then fired at 550°C for 0.5 hours, thereby producing the third coat layer on the second coat layer on the silicon carbide honeycomb carrier. The amount of WC of the third coat layer was 110.19 g/L, in which the amount of application of Pd was 2.39 g/L and the amount of application of Ba sulfate was 10.1 g/L.

### (Examples 2 and 3)

Each exhaust gas purification catalyst of Examples 2 and 3, having a four-layer stacked structure including a silicon carbide honeycomb carrier, a first coat layer, a second coat layer, and a third coat layer in the listed order, was produced in the same manner as in Example 1 except that the amount of barium sulfate in the first coat layer was changed as shown in Table 1.

### (Comparative Example 1)

An exhaust gas purification catalyst of Comparative Example 1, having a three-layer stacked structure including a silicon carbide honeycomb carrier, a second coat layer, and a third coat layer in the listed order was produced in the same manner as in Example 1 except that production of a first coat layer was omitted.

**[Table 1]**

| | First coat layer | | Second coat layer | | | Third coat layer | | | |
|---|---|---|---|---|---|---|---|---|---|
| | | | | | | | | | |
| | | - | 0.38 | 48.4 | 76.0 | 2.39 | 57.4 | 40.3 | 10.1 |
| Example 1 | 6.2 | 23.8 | 0.38 | 48.4 | 76.0 | 2.39 | 57.4 | 40.3 | 10.1 |
| Example 2 | 12.2 | 17.8 | 0.38 | 48.4 | 76.0 | 2.39 | 57.4 | 40.3 | 10.1 |
| Example 3 | 21.0 | 9.1 | 0.38 | 48.4 | 76.0 | 2.39 | 57.4 | 40.3 | 10.1 |

### <Durability treatment>

The resulting exhaust gas purification catalysts of Examples 1 to 3 and Comparative Example 1 were each subjected to a durability test at 1050°C for 24 hours with repeating of sequential switching between a CO-containing model gas of A/F = 12.8, modeling on exhaust gas, and an oxygen atmosphere. Next, the exhaust gas purification catalysts were each retained at 800°C for 2 hours in the presence of a gas of 1% hydrogen and 99% nitrogen and finally the temperature was decreased to room temperature, thereby providing each exhaust gas purification catalyst after durability treatment, of Examples 1 to 3 and Comparative Example 1.

### <Measurement of light-off performances>

Each exhaust gas purification catalyst after durability treatment, of Examples 1 to 3 and Comparative Example 1, was used and light-off performances as exhaust gas purification performances were measured. A piece of 25.4 mm diameter × 30 mm length was extracted as a sample from each catalyst after durability treatment, each sample obtained was installed in an apparatus, and thereafter light-off performances were measured with respect to each sample, under flow of a model gas (volume compositional ratio: CO₂: 14.37%, O₂: 0.38%, NO: 0.40%, HC: 0.08%, CO: 0.38%, H₂O: 10.00%, N₂: balance, flow rate: 24 L/Min) in conditions of A/F perturbation = 14.7 ± 1.0, and 1.0 Hz (adjusted so that Rich = CO and Lean = O₂ were achieved). The gas temperature at a catalyst inlet was changed from 100°C to 450°C at a certain rate of temperature rise (30°C/min), and the gas composition at each of catalyst inlet and outlet was analyzed to determine the rate of purification of HC. A temperature at which the rate of purification of HC reached 50% was measured (light-off temperature, HC-T50). The rates of purification CO and NOx were also measured by the same method, and a temperature (T50) at which the rate of purification reached 50% and a temperature (T75) at which the rate of purification reached 75% were each measured. It is indicated in all of CO, HC, and NOx that a lower 50% purification temperature (T50) and a lower 75% purification temperature (T75) mean more excellent purification performances. The measurement results are shown in Table 2.

**[Table 2]**

| | CO | HC | NOx | CO | HC | NOx |
|---|---|---|---|---|---|---|
| | T50(°C) | T50(°C) | T50(°C) | T75(°C) | T75(°C) | T75(°C) |
| Comparative Example 1 | 291 | 371 | 293 | 428 | 441 | 438 |
| Example 1 | 253 | 288 | 253 | 262 | 330 | 278 |
| Example 2 | 253 | 286 | 254 | 262 | 327 | 277 |
| Example 3 | 262 | 306 | 262 | 275 | 354 | 302 |

It has been found from comparison between Comparative Example 1 and Examples 1 to 3 that provision of the first coat layer significantly decreases the 50% purification temperature (T50) and the 75% purification temperature (T75) after durability treatment and remarkably enhance catalyst performances. It has also been found that the 50% purification temperature (T50) and the 75% purification temperature (T75) are changed depending on the amount of Ba included in the first coat layer.

### [Industrial Applicability]

The exhaust gas purification catalyst or the like of the present disclosure can be widely and effectively utilized as an exhaust gas purification catalyst in an internal-combustion engine in an automobile or the like, because, although a substrate including silicon carbide is used, poisoning of a noble metal component is inhibited and the exhaust gas purification catalyst exhibit excellent purification performances and long-term durability, as a three way catalyst (TWC) for decrease of NOx, CO, HC, and the like in exhaust gas. In particular, the exhaust gas purification catalyst or the like of the present disclosure can be especially effectively utilized as an exhaust gas purification catalyst in an internal-combustion engine in an automobile or the like, on which an electric heating catalyst (EHC) is mounted, and is especially useful as an exhaust gas purification catalyst in a recent light automobile or small ordinary automobile in which a gasoline engine high in efficiency, small in amount of emission of CO₂ and good in fuel efficiency is adopted.

### [Reference Signs List]

- 100: exhaust gas purification catalyst
- 10: substrate
- 11: first coat layer
- 21: second coat layer
- 31: third coat layer

## Claims

1. An exhaust gas purification catalyst having a stacked structure comprising at least a substrate, a first coat layer and a second coat layer in the listed order, wherein
the substrate is one selected from the group consisting of a silicon carbide carrier comprising silicon carbide and a silicon carbide-covering carrier on which a coating layer comprising silicon carbide is provided,
the first coat layer comprises a compound including one or more alkaline-earth metals selected from the group consisting of magnesium (Mg), calcium (Ca), strontium (Sr), and barium (Ba), and
the second coat layer comprises one or more platinum group elements selected from the group consisting of rhodium (Rh), platinum (Pt), and palladium (Pd).

2. The exhaust gas purification catalyst according to claim 1, wherein the first coat layer comprises 10 parts by mass or less of a platinum group element under the assumption that a total content of the platinum group elements comprised in other than the first coat layer is 100 parts by mass.

3. The exhaust gas purification catalyst according to claim 1 or 2, wherein the first coat layer comprises substantially no platinum group element.

4. The exhaust gas purification catalyst according to any one of claims 1 to 3, wherein the first coat layer further comprises alumina.

5. The exhaust gas purification catalyst according to claim 4, wherein a molar ratio between the alumina and the alkaline-earth metal element comprised in the first coat layer is 1:0.01 to 1.2.

6. The exhaust gas purification catalyst according to any one of claims 1 to 5, wherein the platinum group elements comprised in the second coat layer comprise rhodium (Rh).

7. The exhaust gas purification catalyst according to any one of claims 1 to 6, wherein
the stacked structure comprises at least the substrate, the first coat layer, the second coat layer, and a third coat layer in the listed order, and
the third coat layer comprises one or more platinum group elements selected from the group consisting of ruthenium (Ru), rhodium (Rh), palladium (Pd), and platinum (Pt).

8. The exhaust gas purification catalyst according to any one of claims 1 to 7, wherein the second coat layer further comprises an oxygen storage and release material.

9. The exhaust gas purification catalyst according to claim 8, wherein the oxygen storage and release material in the second coat layer comprises a powder of one or more inorganic oxides selected from the group consisting of ceria and a ceria-based composite oxide.

10. An exhaust gas purification catalyst apparatus for vehicles, comprising at least
the exhaust gas purification catalyst according to any one of claims 1 to 9, and
a heating unit that electrically heats the exhaust gas purification catalyst.
